# EUROPEAN PATENT APPLICATION

(11) **EP 3 330 506 A1**
(43) Date of publication of application: **06.06.2018**
(21) Application number: 16832993.6
(22) Date of filing: 01.08.2016
(51) Int. Cl.: F01N 3/20, B01D 53/94, B60W 10/06, B60W 10/30, B60W 20/00, F01N 3/24, F01N 3/028

(54) **CATALYST HEATING DEVICE**

(30) Priority: 31.07.2015 JP 2015152054
(71) Applicant: Imagineering, Inc., Kobe-shi, Hyogo 650-0047 (JP)
(72) Inventor: IKEDA Yuji, Kobe-shi Hyogo 650-0047 (JP)
(74) Representative: Smith, Matthew
(86) International application number: PCT/JP2016/072517
(87) International publication number: WO 2017/022714

(57) **Abstract**

To shorten a time period of a catalyst heating without increasing the cost largely. A catalyst heating system 1 for heating a catalyst provided at an exhaust passage 5 of a vehicle, the system comprises a purifying catalyst 6 provided in the exhaust passage 5, a water storage part 2 provided at an upstream of the purifying catalyst 6 in the exhaust passage 5 and along a bottom side of the exhaust passage 5, an upper part of the water storage part 2 being opened to the exhaust passage 5, an electromagnetic wave emitter 3 arranged above the water storage part 2 and configured to emit an electromagnetic wave to moisture stored inside the water storage part 2, thereby heating up the moisture and generating water vapor therefrom, and a controller 4 configured to control the electromagnetic wave emitter 3, and the controller 4 controls the electromagnetic wave emitter 3 to emit the electromagnetic wave for a predetermined time period when an engine of the vehicle starts to run.

## Description

### TECHNICAL FIELD

The present invention relates to a catalyst heating system, specifically a catalyst heating system that heats a purifying catalyst provided at an exhaust passage of an internal combustion engine of a vehicle by using a microwave.

### BACKGROUND ART

It takes much time for the exhaust-gas-purifying-catalyst to approach the activation temperature immediately after the engine of the vehicle starts to run for the reason of low temperature of the ambient temperature at the cold region or in winter season. During that time, the exhaust gas that is not purified is going to release outside. In order to avoid this, the heater to heat up the catalyst at the engine start is provided in many vehicles. However, there are many types that require about several tens of seconds for heating up the catalyst at the time being, and the low power techniques are required since the electric power for use in the heater is large. This is the same in a case where a mode is shifted from the hybrid mode into the engine mode in specifically the hybrid car.

The method for solving the above problem is considered, which the heater layer made of the carbon micro-coils is provided in the vicinity of the catalyst, the heater layer is warmed-up by the microwave, and thereby, the shortening of the heating time is achieved (Patent Document 1).

### PRIOR ART DOCUMENTS

### PATENT DOCUMENT(S)

Patent Document 1: WO2013/039123

### SUMARRY OF INVENTION

### PROBLEM TO BE SOLVED BY INVENTION

However, the material cost for the carbon micro-coils is high at the moment, and it cannot say that the cost is appropriate from the viewpoint of arrangement of the catalyst heater provided in the vehicle.

The present invention is made from the above viewpoints.

### MEANS FOR SOLVING THE ABOVE PROBLEMS

A catalyst heating system for heating a catalyst provided at an exhaust passage of a vehicle, the system comprises a purifying catalyst provided in the exhaust passage, a water storage part provided at an upstream of the purifying catalyst in the exhaust passage and along a bottom side of the exhaust passage, an upper part of the water storage part being opened to the exhaust passage, an electromagnetic wave emitter arranged above the water storage part and configured to emit an electromagnetic wave to moisture stored inside the water storage part, thereby heating up the moisture and generating water vapor therefrom, and a controller configured to control the electromagnetic wave emitter, and the controller controls the electromagnetic wave emitter to emit the electromagnetic wave for a predetermined time period when an engine of the vehicle starts to run.

### EFFECT OF INVENTION

According to a catalyst heating system of the present invention, a shortening of time for heating a catalyst can be achieved without increasing the cost largely.

### BRIEF DESCRIPTION OF FIGURES

Fig. 1 shows an overall schematic structural view of a catalyst heating system of the first present embodiment.
Fig. 2 shows the schematic structural view of a partially cutting portion illustrating a modification example of a water storage part of the same catalyst heating system.
Fig. 3 shows the overall schematic structural view of a catalyst heating system of the second present embodiment.

### EMBODIMENTS FOR IMPLEMENTING THE INVENTION

In below, embodiments of the present invention are described in details based on figures. Note that, following embodiments are essentially preferable examples, and the scope of the present invention, the application, or the use is not intended to be limited.

### FIRST EMBODIMENT

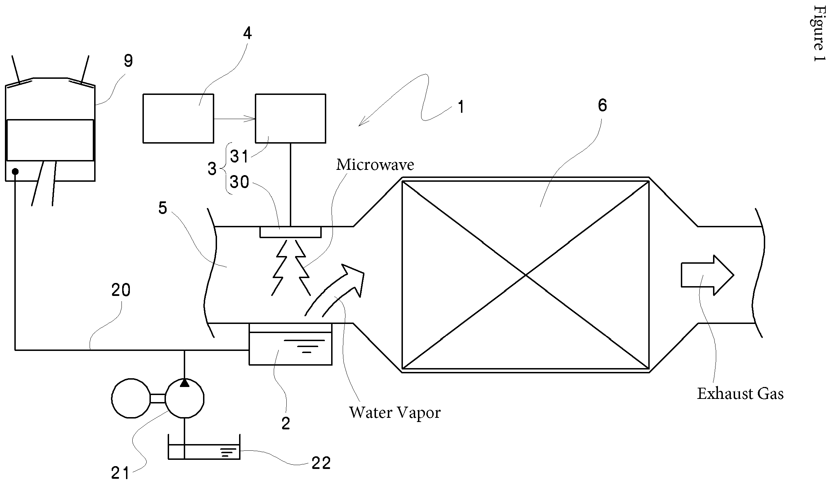

Referring to Fig.1, a catalyst heating system of the first present embodiment is illustrated. The catalyst heating system 1 aims to heat a purifying catalyst 6 provided at an exhaust passage 5 of a vehicle. The catalyst heating system 1 comprises a water storage part 2 provided at an upstream of the purifying catalyst 6 in the exhaust passage 5 and along a bottom side of the exhaust passage 5, an upper part of the water storage part 2 being opened to the exhaust passage 5, a microwave emitter 3 (comprising a microwave emission antenna 30 and a microwave oscillator 31) arranged above the water storage part 2 and configured to generate water vapor by emitting an electromagnetic wave and heating up moisture stored at the water storage part 2, and a controller 4 configured to control the microwave emitter 3. The controller 4 controls the microwave emitter 3 to emit the microwave for a predetermined time period when an engine of the vehicle starts to run.

The moisture stored inside the water storage part 2 is heated up and then water vapor is generated by irradiating microwave from the microwave emitter 3 into the moisture. The water vapor is joined together with the exhaust gas accompanying to an operation of an internal combustion engine 9, flown towards the direction of the purifying catalyst 6, and utilized for heating up the purifying catalyst 6 together with the high-temperature-exhaust-gas. Thereby, it can shorten time for the exhaust-gas-purifying-catalyst to approach to the activation temperature. Moreover, a low power consumption can be achieved since the heater designated to heat up the purifying catalyst 6 is not required to be provided separately.

Note that, a cooling water for cooling down the internal combustion engine body 9 can be used as the moisture in the water storage part 2. The cooling water is supplied into the water storage part 2 through a water supply pipe 20 by use of a pump 21. Note that, when the vehicle was operated on the day before, the moisture generated inside the exhaust passage 5 on the vehicle operation is remained as a dew condensation water inside the water storage part 2 by being dew-condensed during the night time after the end of engine operation. Accordingly, in a case where the amount of the dew condensation water is enough when the engine of the vehicle starts to run, the cooling water is not required to be introduced into the water storage part 2 by the pump 21, the water is not supplied from the outside, only the dew condensation water is used inside a closed space, and thereby, the exhaust gas leakage from the exhaust passage 5 can be prevented. On the contrary, in a case where the amount of the dew condensation water is reduced when the engine of the vehicle starts to run, the cooling water is firstly introduced into the water storage part 2 by use of the pump 21, and then, the microwave may be emitted from the microwave emitter 3. Here, the amount of the dew condensation water remained inside is measured by an optical sensor and etc. Moreover, the moisture supplied into the water storage part 2 is changed into CO₂ and H₂O if the exhaust gas passing through the catalyst 6 is completely burned. It may be configured that the H₂O is recirculated and reused.

A corrosion prevention material may preferably be used for a material that constitutes the water storage part 2 from the viewpoint of the corrosion (oxidation) prevention. The corrosion prevention material such as a material being made in non-metal can also be used; however, the corrosion prevention (corrosion resistance) process is performed on the material in the present embodiment. The corrosion prevention process is for example, a coating corrosion protection, or an electrolytic protection, and any type of method may be adopted.

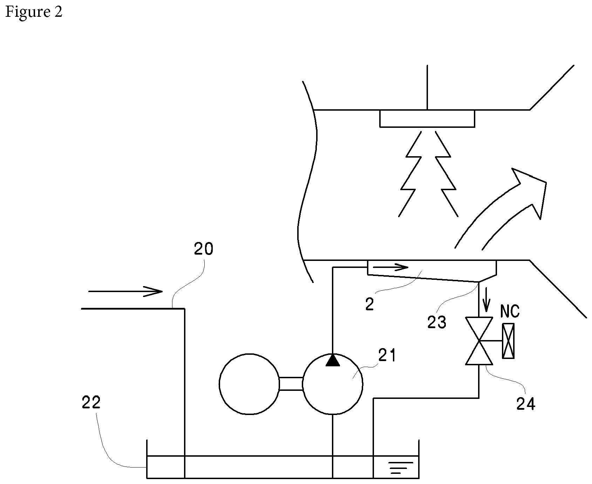

Moreover, a depth of the water storage part 2 is low as much as possible, as illustrated in Fig. 2, for example, the depth is about from 5mm to 10 mm, the water is supplied through the pump 21 from the water tank 22 immediately before the heating performance, and it is preferable that the moisture stored at the water storage part 2 is not completely remained by changing into the water vapor via the microwave heating up after the end of the heating process. Moreover, the bottom surface of the water storage part 2 is inclined somewhat, a release hole 23 is formed at the deepest point in a vertical direction, and a release valve 24 (for example, normal-close-type-two-way-solenoid-valve) arranged at the release hole 23 is released and opened in order to control not to remain the moisture inside the water storage part 2. Accordingly, the corrosion of the water storage part 2 can be prevented by keeping the non-water existing state in the water storage part 2 when the water vapor is not generated.

In the above embodiment, the engine start timing is taken into consideration as a hypothesis, and such an operation may be performed when the mode is shifted from the hybrid mode to the engine mode in a hybrid car. Moreover, the microwave is utilized in the above embodiment; however, an electromagnetic wave except for microwave may be used.

### MODIFICATION EXAMPLE OF FIRST EMBODIMENT

An electromagnetic wave absorber is arranged at the water storage part 2 in a modification example of the first embodiment. The electromagnetic wave absorber 7 is not specifically limited, and may be the one being heated and reaching up to the high temperature in a short time period by the microwave irradiation, for example, the micro-coils in which the carbon atom or the molecule including the carbon is a main component, specifically, the carbon micro-coils, can be used. The carbon micro-coils can be risen in temperature up to 300 □ in a short time period, and it becomes carbonized at about from 600 □ through 700 □ under the oxygen existence atmosphere. Therefore, the carbon micro-coil is preferably covered by a thinner coating layer in the present embodiment that it is provided at the exhaust passage 5 of the vehicle in which there may be a case where the temperature reaches to 800 □ or the above. Moreover, an activated carbon except for the carbon micro-coil can also be utilized.

In the above configuration, the microwave is emitted from the microwave emitter 3 when the catalyst is heated up, in other word, immediately before the water vapor generation, and the electromagnetic wave absorber is heated up. Then, water is supplied into the water storage part 2 provided with the electromagnetic wave absorber 7 heated up to about 300 □, the supplied water is changed into the water vapor immediately and quickly by the electromagnetic wave absorber 7 heated up to about 300 □, then, filled with at the space before the catalyst, and utilized for the catalyst heating and temperature increase thereof as well as the first embodiment.

### SECOND EMBODIMENT

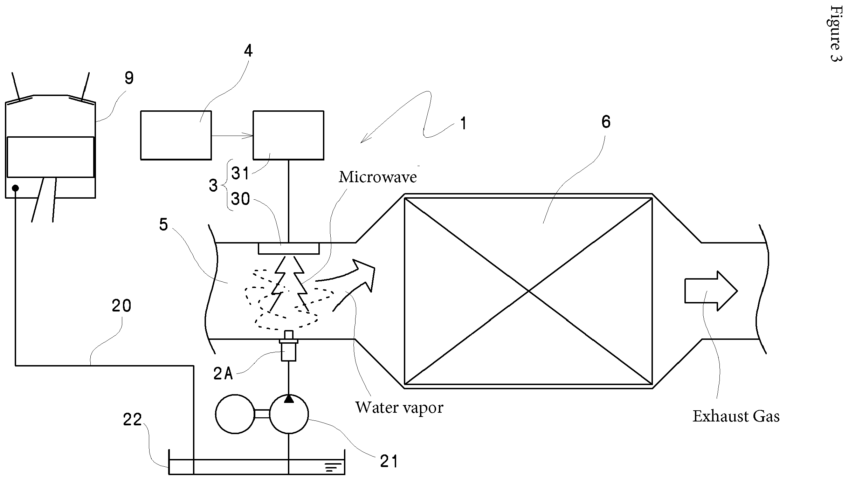

A catalyst heating system regarding the present second embodiment is explained by referring to Fig. 3. The catalyst heating system 1 aims to heat the purifying catalyst 6 provided at the exhaust passage 5 of a vehicle as well as the first embodiment. Specifically, the catalyst heating system 1 comprises an injecting device 2A configured to inject a liquid into an upstream side of the purifying catalyst 6 at the exhaust passage 5, an electromagnetic wave emitter 3 arranged at a part opposed to the injecting device 2A and configured to generate water vapor by emitting an electromagnetic wave and heating up the nebulized liquid injected from the injecting device 2, and a controller 4 configured to control the electromagnetic wave emitter 3. The controller 4 controls the electromagnetic wave emitter 3 to emit the electromagnetic wave from the electromagnetic wave emitter 3 for a predetermined time period when the engine of the vehicle starts to run.

A difference from the first embodiment is, not providing the water storage part 2, to supply the moisture in the nebulized-and-mist-state into the space before the catalyst by use of the injecting device 2A such as an injector, through the pump 21 from a water tank 22, then, to emit the microwave from the microwave emitter 3, and to change the nebulized-and-mist-state water into the water vapor. In this case, it is preferable to use the heat-state water generated by heat-changing the water in the tank 22 stored in advance with the cooling water becoming in high temperature by cooling down the internal combustion engine body.

### THIRD EMBODIMENT

A catalyst heating system 1 of the third present embodiment is configured to spray out water mist into an end surface of the catalyst 6 in high speed and high pressure jet state by an injecting device configured as well as a printing ink jet. At the time moment, the electromagnetic wave absorber is wound around an inject nozzle part of the injecting device, the microwave is emitted from the microwave emitter 3, the inject nozzle part is heated up, and then pressured-injected so as to become 200 □ or the above in temperature and the water mist is sprayed out into the catalyst end surface. Thereby, the end surface of the catalyst 6 can efficiently be heated up and increased in temperature. Moreover, the injection nozzle part can be heated up by other method such as an electric heating line without providing the microwave emitter 3.

### INDUSTRIAL APPLICABILITY

As illustrated in above, the present invention is effective to a catalyst heating system of a vehicle.

### NUMARAL SYMBOLS EXPLANATION

- 1.: Catalyst Heating System
- 2.: Water Storage Part
- 2A.: Injecting Device
- 3.: Microwave Emitter
- 30.: Microwave Emission Antenna
- 31.: Microwave Oscillator
- 4.: Controller
- 5.: Exhaust Passage
- 6.: Catalyst
- 20.: Water Supply Pipe
- 21.: Pump
- 22: Internal Combustion Engine

## Claims

1. A catalyst heating system for heating a catalyst provided at an exhaust passage of a vehicle, the system comprising:
a purifying catalyst provided in the exhaust passage;
a water storage part provided at an upstream of the purifying catalyst in the exhaust passage and along a bottom side of the exhaust passage, an upper part of the water storage part being opened to the exhaust passage;
an electromagnetic wave emitter arranged above the water storage part and configured to emit an electromagnetic wave to moisture stored inside the water storage part, thereby heating up the moisture and generating water vapor therefrom; and
a controller configured to control the electromagnetic wave emitter, and
wherein the controller controls the electromagnetic wave emitter to emit the electromagnetic wave for a predetermined time period when an engine of the vehicle starts to run.

2. A catalyst heating system for heating a catalyst provided at an exhaust passage of a hybrid car capable of shifting from a hybrid mode to an engine mode, the system comprising:
a purifying catalyst provided in the exhaust passage;
a water storage part provided at an upstream of the purifying catalyst at the exhaust passage and along a bottom side of the exhaust passage, an upper part of the water storage part being opened to the exhaust passage;
an electromagnetic wave emitter arranged above the water storage part and configured to emit an electromagnetic wave to moisture stored inside the water storage part, thereby heating up the moisture and generating water vapor therefrom; and
a controller configured to control the electromagnetic wave emitter, and
wherein the controller controls the electromagnetic wave emitter to emit the electromagnetic wave for a predetermined time period when the hybrid mode is shifted to the engine mode in the hybrid car.
